# EUROPÄISCHE PATENTSCHRIFT

(11) **EP 1 632 181 B1**
(45) Veröffentlichungstag und Bekanntmachung des Hinweises auf die Patenterteilung: **07.11.2007**
(21) Anmeldenummer: 04021078.3
(22) Anmeldetag: 04.09.2004
(51) Int. Cl.: A61B 6/00, G06T 5/00, G06T 3/00, G06T 7/00

(54) **Verfahren und System zur Bildkomposition**
Marker-based mosaicing of X-ray images to generate a long-leg radiograph
Processus et système pour composer une image

(43) Veröffentlichungstag der Anmeldung: 08.03.2006
(73) Patentinhaber: Universitätsspital Basel, Carcas Group, 4031 Basel (CH)
(72) Erfinder: Messmer, Peter, Dr., 8091 Zürich (CH); Burgstaller, Wolfgang, 4310 Rheinfelden (CH); Wirth, Joachim, Dr., 4031 Basel (CH); Regazzoni, Pietro, Prof., Dr., 4031 Basel (CH); Jacob, Augustinus, Ludwig, Dr., 4031 Basel (CH)
(74) Vertreter: Fischer, Michael

(56) Entgegenhaltungen:
- EP-A- 0 919 858
- US-A- 5 675 380
- US-A- 5 833 607
- US-A- 6 101 238

## Beschreibung

Die vorliegende Erfindung betrifft ein Verfahren und ein System zur Komposition eines Gesamtbildes aus mit einem bildgebenden Verfahren aus dem Inneren eines Körpers gewonnenen Teilbildern.

Ein derartiges Verfahren und ein derartiges System sind beispielsweise der aus dem amerikanischen Patent 5,833,607 bekannt. Dieses Patent offenbart ein Computersystem, das automatisch eine Abfolge von Teilbildern bei der peripheren Angiographie aufnimmt und diese Teilbilder mosaikartig zu einem Gesamtbild eines Beines oder Armes zusammenfügt. Das Zusammenfügen der Teilbilder wird dabei erzielt, indem der Knochen und die Gefässe global durch die Messung eines Überlappungsverhältnisses zur Übereinstimmung gebracht werden und durch Abstimmung auf detaillierte lokale anatomische Merkmale infolge von Deformationen verfeinert werden. Das System kombiniert so einen Mehrfach-Nachweis in den Überlappungsbereichen der Teilbilder und maximiert so das Überlappungsverhältnis. Diese Vorgehensweise nutzt so den Mehrfach-Nachweis für die Überlappung aus und zeigt somit ein weitaus zuverlässigeres Resultat der Rekonstruktion. Ausserdem ist es auf diese Weise möglich, eine lokale Verfeinerung vorzunehmen, um eine mögliche Diskrepanz der Darstellung und eine nichtlineare Bewegung des Patienten zu kompensieren. Bei der Angiographie vollführt daher das Aufnahmesystem, entweder durch Bewegung des Tisches oder der Röntgenröhre, eine definierte und genau bekannte -lineare-Bewegung, deren Kenntnis zur Komposition des Gesamtbildes benutzt wird. In vielen Fällen wird sogar der Tisch bzw. die Röhre zur Aufnahme angehalten, sodass die Aufnahmeposition statisch und bekannt ist. Die Aufgabe reduziert sich gegenüber dem allgemeinen Fall auf die Festlegung der Ueberlappungsstrecke. Zusätzliche, etwa seitliche oder nichtlineare Bewegungen können nur in geringem Masse kompensiert werden.

Bei diesem Verfahren wird damit schon ein Gesamtbild, beispielsweise von den Blutgefässen eines Beines, aus einer Anzahl von Teilbildern dargestellt. Bei dieser Art von medizinischer Untersuchung kommt es jedoch nicht zu Einschränkungen der Diagnose, wenn das Gesamtbild nicht exakt längen- und winkelgetreu zusammengesetzt wird. Bei der Versorgung von Frakturen, insbesondere des Ober- und Unterschenkels, ist es aber unabdingbar, dass beim Zusammenfügen der Knochenfragmente (Osteosynthese) die Achsen und Längen der Knochen korrekt wieder hergestellt werden. In einem Operationssaal einsetzbare mobile Röntgengeräte, die während einer Operation zur Durchleuchtung eingesetzt werden (Fluoroskope), haben in der Regel nur einen begrenzten Aufnahmebereich (ca. 120 mm x 120 mm für einen ISO-C-Kubus; typische chirurgische Durchleuchtungsgeräte haben einen Durchmesser bis ca. 20 cm), so dass es nicht möglich ist, den Knochen in seiner gesamten Länge mit einer einzigen Aufnahme zu erfassen. Aus einer Sequenz von Fluoroskopiebilder muss der Chirurg ohne weitere Hilfsmittel mental ein Gesamtbild konstruieren, auf dessen Basis er die weitere Operation plant. Mit weiteren Bildfolgen wird die Osteosynthese dann fortlaufend überprüft. Dabei wäre eine Messung der Längen und Winkel wünschenswert; sie ist jedoch auf diese Weise technisch nicht durchführbar.

Der vorliegenden Erfindung liegt daher die Aufgabe zugrunde, ein Verfahren und ein System zur Komposition eines Gesamtbildes aus mit einem bildgebenden Verfahren aus dem Inneren eines Körpers gewonnenen Teilbildern anzugeben, bei denen es möglich ist, die wahren Verhältnisse im Körperinnern auch massstabs- und winkelgetreu angeben zu können.

Bezüglich des Verfahrens wird diese Aufgabe erfindungsgemäss dadurch gelöst, dass ein Verfahren zur Komposition eines Gesamtbildes aus mit einem bildgebenden Verfahren aus dem Inneren eines Körpers gewonnenen Teilbildern gemäß Anspruch 1 angegeben wird.

Auf diese Weise lassen sich durch die Verwendung der absolut kodierten Ortsmarken, die in den Teilbildern mittels datentechnischer Verfahren automatisch erkannt werden, die Teilbilder automatisch zu dem Gesamtbild zusammenfügen, welches ein längen- und winkelgetreues Abbild darstellt und somit die Basis für eine zuverlässige Winkel- und/oder Längenmessung darstellt.

Damit diese Ortsmarken auch tatsächlich absolut codierte, für benachbarte Teilbilder konsistente Orientierungspunkte liefern, ist es vorteilhaft, die Ortsmarken als flächige oder als dreidimensionale Struktur in einer Traganordnung für den Körper zu integrieren. So kann diese Struktur beispielsweise als ein absolut kodierten Referenzpanel (z.B. in Form einer Auflage ode eines Aufbaus auf dem Operationstisch) realisiert sein.

Dabei ergibt sich eine besonders einfache Realisierung der Ortsmarken bei Röntgenstrahlung, indem die Ortsmarken in einem Referenzpanel als röntgenstrahlundurchlässige Marker realisiert sind. Entsprechend können die Ortsmarken in anderen bildgebenden Verfahren entsprechend realisiert sein. Bei der Magnetresonanztomographie können in dem Referenzpanel eine Platzierung von auf das anregende Magnetfeld reagierende Kleinstvolumina vorgesehen sein. Bei nuklearmedizinischen Verfahren können die Ortmarken in dem Referenzpanel als Platzierung von radioaktiv strahlenden Kleinstvolumina realisiert sein, deren Zerfallsstrahlung von dem Collimator besonders hinsichtlich der Energie gegenüber der nuklearmedinzinischen "Nutzstrahlung" (meist Technetium^{99-M} oder Iod^{123-r} oder Thallium²⁰¹) diskriminiert werden kann.

Besonders durch die absolute Position der Ortsmarken ist deren Abstand zueinander bekannt. Damit kann bei Verwendung einer im wesentlichen punktförmigen Strahlungsquelle mittels der Ortsmarken eine aufgrund des konischen Strahlengangs auftretende Verzerrung korrigiert werden. Diese Korrektur kann einerseits erzielt werden, indem radial oder axial entfernte Bildpunkte des Teilbildes ausgeblendet werden, wenn für die Lage dieser Bildpunkte relativ zur Strahlungsquelle ein vorbestimmbarer Grenzwert für einen zulässigen Verzerrungsgrad überschritten wird. Ergänzend oder alternativ dazu kann diese Korrektur erzielt werden, indem mittels eines Referenzbildes, das mit einem mit Referenzortsmarken ausgestatteten Körper gewonnenen wird, eine optischer Korrekturalgorithmus zur Eliminierung der optischen Verzerrung und damit zur Lageveränderung der Bildpunkte ermittelt wird. Die Korrektur für jedes Teilbild kann dann andererseits erzielt werden, indem der Korrekturalgorithmus auf die Bildpunkte eines Teilbildes angewendet wird und damit im Ergebnis wieder ein längen- und winkelgetreues Abbild der Situation im Körperinnern dargestellt wird.

Während die vorstehend beschriebene Korrektur der Verzerrung eher für einen senkrecht auf der Projektionsebene stehenden Strahlungskegel angewendet werden kann, kann die Korrektur bei einer schräg auf eine Projektionsfläche gerichteten Strahlungsquelle erzielt werden, indem anhand der im Teilbild erfassten Ortsmarken eine Entzerrung der Ortsmarken auf ihre ursprünglichen Abstände und damit eine Entzerrung der Bildpunkte in dem Teilbild vorgenommen wird.

Beim Zusammenfügen der Bilder sind software-gestützte Massnahmen zur Lösung des Problems der Randüberlappungen vorzusehen, die in vorteilhafter Weise darin bestehen können, dass sich überlappende Bildpunkte benachbarter Teilbilder aufaddiert und gemittelt dargestellt werden. Alternativ können aber auch sich überlappende Bildpunkt auf zwei benachbarten Teilbildern bestimmt werden und weiter auf einem der beiden Teilbilder die Bildpunkte des Überlappungsbereichs für die Komposition des Gesamtbildes zugunsten der Bildpunkte des Überlappungsbereichs auf dem jeweils anderen der zwei Teilbilder verworfen werden.

Zur einfachen Realisierung der Ortsmarken und zur zuverlässigen software-gestützten Erfassung der absoluten Position der Ortsmarken kann die Position der Ortsmarken in Form einer maschinenlesbaren Codierung gestaltet werden, beispielsweise als strahlungsopaquer Strichcode oder als Folge von hintereinander angeordneten Strichen, bei denen ein kurzer Strich die binäre Null und ein dazu im Vergleich längerer Strich die binäre Eins repräsentieren oder umgekehrt und somit ein Zahlenwert dargestellt wird, der den Ort der Ortsmarke angibt.

Ein weitere erfindungsgemässe Lösung für die weiter oben stehende Aufgabe ergibt sich hinsichtlich des Verfahrens, wenn ein Verfahren zur Komposition eines Gesamtbildes aus mit einem bildgebenden Verfahren aus dem Inneren eines Körpers gewonnenen Teilbildern durchgeführt wird, bei dem
a) in jedem Teilbild (10, 10a bis 10t), vorzugsweise in seinen Randbereichen, mindestens eine mittels des bildgebenden Verfahrens abgerufene Struktur datentechnisch erkannt wird;
b) anhand der in den Teilbildern (10, 10a bis 10t) erkannten Strukturen die Position und/oder Ausrichtung eines Teilbildes (10, 10a bis 10t) im Bezug auf ein benachbartes Teilbild bestimmt wird;
c) anhand der bestimmten Position und/oder Ausrichtung der Teilbilder (10, 10a bis 10t) das Gesamtbild (12) zusammengefügt wird.

Diese Lösung zielt daher darauf ab, im Teilbild selbst erkennbare Strukturen, wie z.B. auffällige Konturen oder Formationen, direkt bei der Bildverarbeitung zu erkennen und derartige erkannte Strukturen zur Synthese des Gesamtbildes zu überlappen und so das Gesamtbild rechnerisch, ggfs. unter Zuhilfenahme aller vorstehend beschriebenen bildverarbeitungstechnischen Massnahmen zu erstellen. Vorteilhaft ist es dabei, gezielt nach derartigen Strukturen in den Randbereichen der Teilbilder zu suchen, weil auf diese Weise sehr schnell Überlappungen in benachbarten Teilbilder festgestellt werden können, die zur Ausrichtung der Teilbilder relativ zueinander genutzt werden können.

Vorteilhafte Ausgestaltungen der Erfindung sind in weiteren Ansprüchen angegeben.

Die Erfindung wird nachfolgend anhand der Zeichnung beispielsweise näher erläutert. Dabei zeigen:
- Figur 1: eine Aufsicht auf ein absolut codiertes Referenzpanel mit einem künstlichen Oberschenkelknochen;
- Figur 2: ein Ausschnitt aus einem mit dem Referenzpanel gewonnenen und mit Ortsmarkern versehenen Fluoroskopiebild;
- Figur 3: ein Fluoroskopiebild eines Kalibrierpanels und eine korrigierte Einzelaufnahme;
- Figur 4: eine Aufsicht auf die makroskopisch sichtbaren Ortsmarken auf dem Referenzpanel;
- Figur 5: eine Sequenz von Fluoroskopieteilbildern des in Figur 1 gezeigten künstlichen Oberschenkelknochens; und
- Figur 6: ein aus der Sequenz von Teilbildern gemäss Figur 5 zusammengefügtes Gesamtbild.

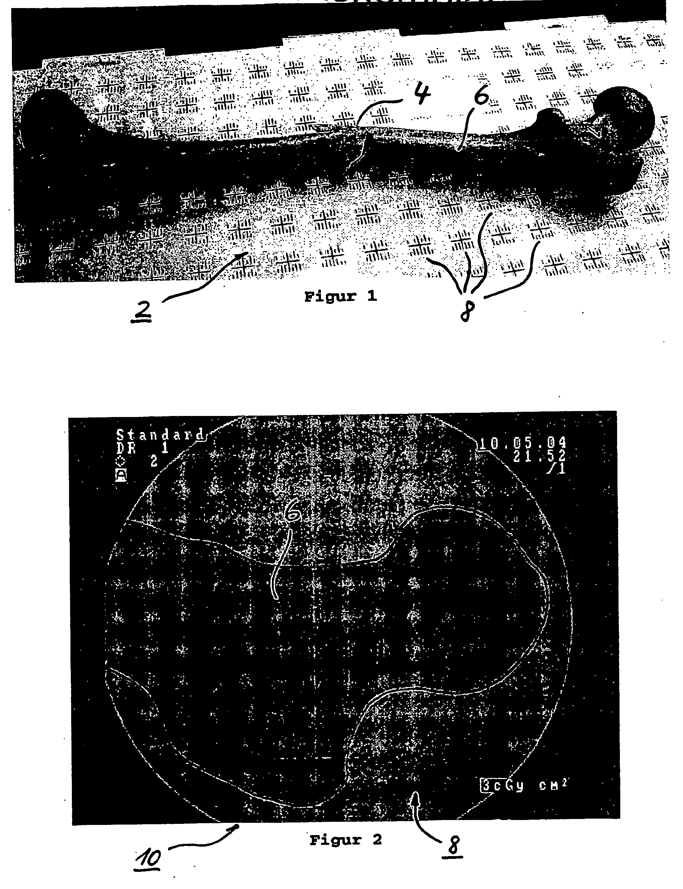

Figur 1 zeigt eine Aufsicht auf ein absolut ortscodiertes Referenzpanel 2, auf welchem ein eine Fraktur 4 aufweisender künstlicher Oberschenkelknochen (Femur) 6 zur Aufnahme von Fluoroskopiebildern aufliegt. Die Fluoroskopiebilder werden mit einem hier nicht weiter dargestellten in einem Operationssaal eingesetzten Röntgengerät gewonnen. Für derartige Röntgengeräte ist es typisch, dass sie die Form eines C-Bogens aufweisen, damit die Röntgenstrahlungsquelle an einem Ende des C-Bogens und der Röntgenstrahlungsdetektor an dem anderen Ende des C-Bogens in räumlich fest zueinander stehendem Bezug angeordnet sind. Das am Röntgenstrahlungsdetektor aufgenommene Bild wird direkt in Echtzeit auf einem von dem Chirurg einsehbaren Sichtgerät dargestellt. Bei dieser Art der Röntgentechnik wird von Durchleuchtung oder auch Fluoroskopie gesprochen, weil die Röntgenstrahlung im Detektor auf einen Phosphor trifft, der aufgrund seiner Flureszenseigenschaften leuchtet und dieses Leuchten in CCD-Technik zur Bilddarstellung genutzt wird.

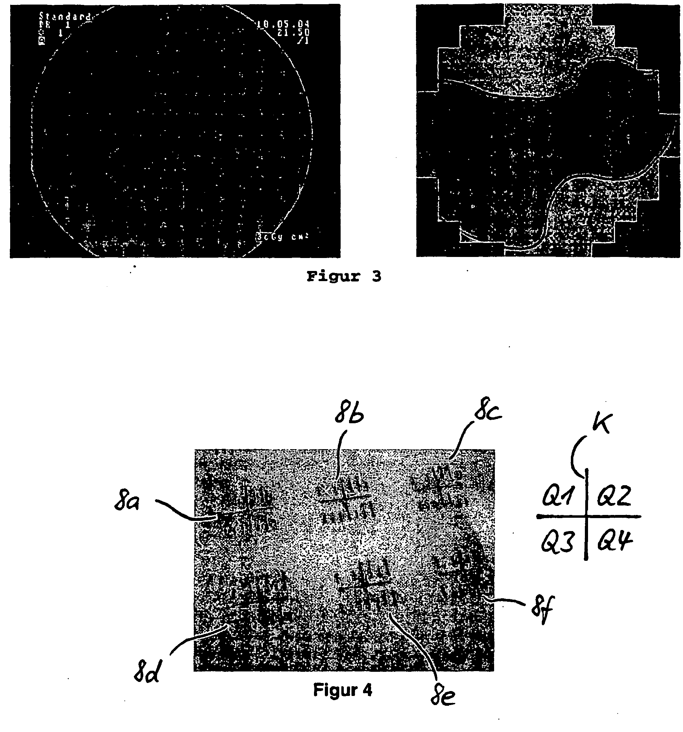

Auf dem für die Röntgenstrahlung durchlässigen Referenzpanel 2 sind radioopaque Marker 8 an den Kreuzungspunkten eines regelmässigen Ortsgitters angebracht. Wie in Figur 2 dargestellt, sind diese Ortsmarker 8 im Fluoroskopieteilbild 10 sichtbar. Neben den Kreuzungspunkten weist jeder Ortsmarker 8 eine Folge von Strichen unterschiedlicher Länge auf, wobei die Folge der kurzen und langen Striche eine maschinenlesbare Information über die genaue Lage des Kreuzungspunktes umfasst (vgl. auch Figur 4).

Das Referenzpanel 2 ist in der Figur 1 nur als zweidimensionale Unterlage gezeigt. Um aber auch in Richtung der Strahlung entsprechende Ortsmarker 8 auf dem Fluoroskopieteilbild 10 abbilden zu können, werden zwei Referenzpanels 2, die senkrecht zueinander angeordnet sind, verwendet, wozu auch Referenzpanel mit unterschiedlicher Grösse verwendet werden können. Es sei hier angemerkt, dass die Referenzpanels 2 natürlich nicht grundsätzlich senkrecht zueinander stehen müssen. Einzigallein zu vermeiden ist, dass sie in einem Winkel von 180° oder einem Vielfachen davon angeordnet sind, weil sie so in ein und derselben Ebene liegen und somit keine dreidimensional Ortsmarkerstruktur erzeugt werden kann.

Bei der Aufnahme der Teilbilder 10 kommt es wegen des konischen Strahlengangs, der durch die im wesentlichen punktförmige Röntgenstrahlungsquelle (Bremsstrahlung eines auf eine Wolfram-Anode gerichteten Elektronenstrahls) verursacht wird, im Fluoroskop zu kissenförmigen Verzerrungen der Teilbilder 10. Aufgrund der Verwendung eines Referenzpanels 2 kann diese Verzerrung vor der Weiterverarbeitung der Teilbilder 10 korrigiert werden. Durch Aufnehmen eines als Kalibrierpanels ausgestalteten Referenzpanels 2 (wie in Figur 3, linke Abbildung, gezeigt) und durch die Auswertung des darauf abgebildeten Gitters lassen sich die zur Korrektur erforderlichen Informationen ermitteln. Die rechte Abbildung in Figur 3 zeigt eine diesbezüglich korrigierte Einzelaufnahme. Nur die Bereiche innerhalb der auf dem Kalibrierpanel erkannten Ortsmarker 8 sind längen- und winkeltreu. In dieser Ausführungsvariante ist in der rechten Abbildung von Figur 3 daher die ausserhalb liegende Bildinformation gelöscht worden. Denkbar wäre es ebenso, einen Korrekturalgorithmus aus der mit dem Kalibrierpanel gewonnenen Bildinformation abzuleiten und die nachfolgenden Teilbilder (d.h. eigentlich die Lage der einzelnen Bildpunkte) entsprechend mit diesem Algorithmus zu überarbeiten.

Jeder Ortsmarker 8 umfasst ein Kreuz K, dessen Mittelpunkt für die Ortsinformation massgebend ist, und eine Reihe von langen und kurzen Strichen, die über Quadranten Q1 bis Q4 verteilt sind, so wie dies schematisch in Figur 4 auf der rechten Seite illustriert ist. Diese Striche repräsentieren die Ortsinformation, die gemäss der Länge der Striche als Ziffern 0 und 1 interpretiert werden und so Zahlen (und damit die Ortsinformation) im Binärsystem darstellen. Es ist in Figur 4 leicht zu erkennen, dass die für die Ortsmarker 8a bis 8c in den Quadranten Q1 und Q2 angegebenen Striche gleichbleibend sind, weil diese Striche die Zeileninformation enthalten (vgl. auch die Ortsmarker 8d bis 8f mit ihrem Strichen in Q1 und Q2). Ein weiterer einfacher Vergleich der Ortsmarkerpaare 8a/8d, 8b/8e und 8c/8f zeigt, dass die Spalteninformation in den Quadranten Q3 und Q4 codiert ist.

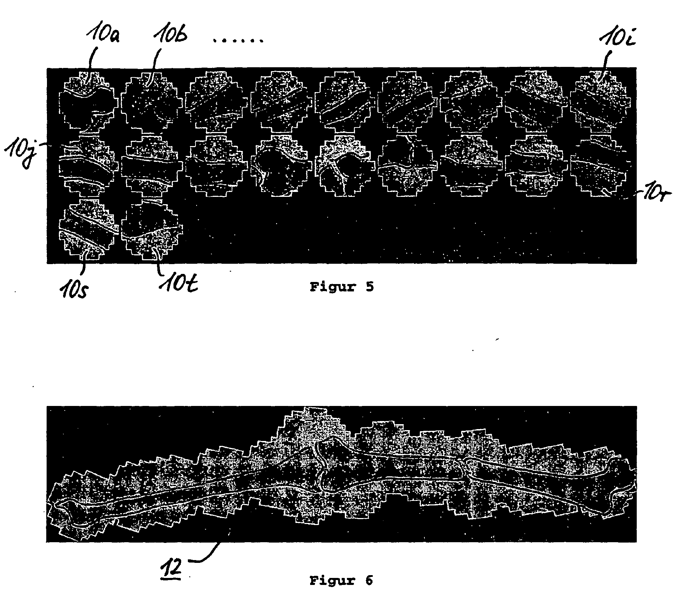

Diese mittels der Striche ausgedrückten binären zahlenfolgen können nun mittels Methoden der computergestützen Bildverarbeitung automatisch identifiziert werden und dienen zur Bestimmung des Referenzpanels (für ap- bzw. laterale Aufnahmen) und der Position der Ortsmarker 8 auf dem Referenzpanel 2. Wenn nun mindestens zwei dieser Ortsmarker 8 pro Teilbild 10a bis 10t (vgl. Figur 5) zuverlässig erkannt werden, so lässt sich die Position jedes dieser Teilbilder 10a bis 10t bezogen auf das längen- und massstabsgetreue Gesamtbild 12 (vgl. Figur 6) bestimmen. Dabei kann das Teilbild 10a bis 10t derotiert in die richtige Position in dem Gesamtbild 12 einfügen werden. Da der Abstand nebeneinanderliegender Ortsmarker 8 bekannt ist, kann auch die Auflösung des Gesamtbildes 12 berechnet werden, wodurch sehr genaue Längen- und Winkelmessungen möglich sind, wie dies vom Chirurg zur Verbesserung einer präzisen Osteosynthese gewünscht ist.

Der konische Strahlengang des Röntgenfluoroskops führt bei der Erfassung dreidimensionaler Strukturen dazu, dass Teile des erfassten Objekts, die näher am Detektor liegen, kleiner abgebildet werden als weiter entferntere. Werden Teilbilder in ap- und in lateraler Richtung aufgenommen, so ist es anhand der mitaufgenommenen Ortsmarker 8 auch möglich, aus dem ap-Bild die Entfernung von Strukturen zum Detektor in der lateralen Ansicht zu bestimmen und umgekehrt. Mit diesen Informationen und der Brennweite des Röntgenfluoroskops lassen sich auch diese Verzerrungen korrigieren.

Das bisher implementierte Verfahren setzt voraus, dass der Strahlengang des Fluoroskops in der Bildmitte senkrecht zum Referenzpanel 2 verläuft. Ist das nicht der Fall, werden die Teilbilder 10 verzerrt. Für eine Korrektur dieser Verzerrung wäre es nach bisheriger Praxis notwendig gewissen, die Orientierung des Röntgenfluoroskops zu kennen. Sind jedoch nun im Teilbild 10 genügend viele Ortsmarker 8 zu erkennen, kann in einfacher Weise aus der Strahlenlehre aufgrund des bekannten Abstandes der Ortsmarker 8 und aufgrund ihrer Position im Teilbild 10 die Orientierung der Röntgenröhre (der Ebene des C-Bogens) bestimmt und diesbezügliche Verzerrungen ebenfalls eliminiert werden.

## Patentansprüche

1. Verfahren zur Komposition eines Gesamtbildes (12) aus mit einem bildgebenden verfahren aus dem Inneren (6) eines Körpers gewonnenen Teilbildern (10, 10a bis 10t), demgemäss:
a) zur Gewinnung jedes Teilbildes (10, 10a bis 10t) mindestens eine mittels des bildgebenden Verfahrens erfassbare Ortsmarke (8, 8a bis 8f), die die Lage des Körpers relativ zu der Ortsmarke (8, 8a bis 8f) wiedergibt, in das Teilbild (10, 10a bis 10t) eingefügt wird;
b) anhand der in den Teilbildern (10, 10a bis 10t) eingefügten Ortsmarken (8, 8a bis 8f) die Position und/oder Ausrichtung dieser Teilbilder (10, 10a bis 10t) im Bezug auf ein absolutes Ortsraster bestimmt wird;
c) anhand der bestimmten Position und/oder Ausrichtung der Teilbilder (10, 10a bis 10t) das Gesamtbild (12) zusammengefügt wird,
**dadurch gekennzeichnet, dass**
bei Verwendung einer im wesentlichen punktförmigen Strahlungsquelle mittels der Ortsmarken (8, 8a bis 8f) eine aufgrund des konischen Strahlengangs auftretende verzerrung der Teilbilder (10, 10a bis 10t) korrigiert wird, indem radial oder axial entfernte Bildpunkte der Teilbilder (10, 10a bis 10t) ausgeblendet werden, wenn für die Lage dieser Bildpunkte relativ zur Strahlungsquelle ein vorbestimmbarer Grenzwert für einen zulässigen Verzerrungsgrad überschritten wird.

2. Verfahren nach Anspruch 1,
**dadurch gekennzeichnet, dass**
die Ortsmarken (8, 8a bis 8f) als flächige oder als dreidimensionale Struktur (2) in einer Traganordnung für den Körper integriert werden, welche in Form einer Auflage oder eines Aufbaus auf einem Operationstisch ist.

3. Verfahren nach Anspruch 1 oder 2,
**dadurch gekennzeichnet, dass**
die Ortsmarken (8, 8a bis 8f) in einem als Kalibrierpanel ausgestalteten und darauf abgebildeten Gitter vorgesehenen Referenzpanel (2) als röntgenstrahlundurchlässige Marker realisiert sind

4. Verfahren nach einem der voranstehenden Ansprüche,
**dadurch gekennzeichnet, dass**
mittels eines Referenzbildes, das mit einem mit Referenzortsmarken ausgestatteten Körper gewonnenen wird, eine optischer Korrekturalgorithmus zur Eliminierung einer optischen Verzerrung und damit zur Lageveränderung der Bildpunkte ermittelt wird.

5. Verfahren nach Anspruch 4,
**dadurch gekennzeichnet, dass**
eine Korrektur mittels des optischen Korrekturalgorithmus erzielt wird, indem der Korrekturalgorithmus auf die Bildpunkte eines Teilbildes (10, 10a bis 10t) angewendet wird.

6. Verfahren nach einem der Ansprüche 1 bis 5,
**dadurch gekennzeichnet, dass**
eine Korrektur bei einer schräg auf eine Projektionsfläche gerichteten Strahlungsquelle erzielt wird, indem anhand der im Teilbild (10, 10a bis 10t) erfassten Ortsmarken (8, 8a bis 8f) eine Entzerrung der Ortsmarken (8, 8a bis 8f) auf ihre ursprünglichen Abstände und damit eine Entzerrung der Bildpunkte in dem Teilbild (10, 10a bis 10t) vorgenommen wird.

7. Verfahren nach einem der Ansprüche 1 bis 6,
**dadurch gekennzeichnet, dass**
sich überlappende Bildpunkte benachbarter Teilbilder (10, 10a bis 10t) aufaddiert und gemittelt dargestellt werden.

8. Verfahren nach einem der Ansprüche 1 bis 7,
**dadurch gekennzeichnet, dass**
sich überlappende Bildpunkt auf zwei benachbarten Teilbildern (10, 10a bis 10t) bestimmt werden und weiter auf einem der beiden Teilbilder (10, 10a bis 10t) die Bildpunkte des Überlappungsbereichs für die Komposition des Gesamtbildes (12) zugunsten der Bildpunkte des Überlappungsbereichs auf dem jeweils anderen der zwei Teilbilder (10, 10a bis 10t) verworfen wird.

9. Verfahren nach einem der Ansprüche 1 bis 8,
**dadurch gekennzeichnet, dass**
die Position der Ortsmarken (8, 8a bis 8f) in Form einer maschinenlesbaren Codierung gestaltet werden, vorzugsweise als strahlungsopaquer Strichcode.

10. Verfahren nach einem der Ansprüche 1 bis 9,
**dadurch gekennzeichnet, dass**
a) in jedem Teilbild (10, 10a bis 10t), vorzugsweise in seinen Randbereichen, mindestens eine mittels des bildgebenden Verfahrens abgerufene Struktur datentechnisch erkannt wird;
b) anhand der in den Teilbildern (10, 10a bis 10t) erkannten Strukturen die Position und/oder Ausrichtung eines Teilbildes (10, 10a bis 10t) im Bezug auf ein benachbartes Teilbild bestimmt wird.

11. System zur Komposition eines Gesamtbildes (12) aus mit einer bildgebenden Vorrichtung aus dem Inneren (6) eines Körpers gewonnenen Teilbildern (10, 10a bis 10t), demgemäß
a) mittels des bildgebenden Verfahrens erfassbare Ortsmarken (8, 8a bis 8f) vorgesehen sind, die die Lage des Körpers relativ zu der Ortsmarke (8, 8a bis 8f) für ein Teilbild (10, 10a bis 10t) wiedergeben;
b) ein Bildspeicher für das Teilbild (10, 10a bis 10t), das mit den erfaßten Ortsmarken (8, 8a bis 8f) ergänzt ist;
c) einer Rechnereinheit, die die Teilbilder (10, 10a bis 10t) aus dem Bildspeicher abruft und anhand der in den Teilbildern (10, 10a bis 10t) eingefügten Ortsmarken (8, 8a bis 8f) die Position und/oder Ausrichtung dieses Teilbildes (10, 10a bis 10t) im Bezug auf ein absolutes Ortsraster bestimmt und anhand der bestimmten Position und/oder Ausrichtung der Teilbilder (10, 10a bis 10t) das Gesamtbild (12) zusammengefügt; und
d) einer Anzeigeeinheit zur optischen Darstellung des Gesamtbildes (12),
**dadurch gekennzeichnet, dass**
bei Verwendung einer im wesentlichen punktförmigen Strahlungsquelle mittels der Ortsmarken (8, 8a bis 8f) eine aufgrund des konischen Strahlengangs auftretende Verzerrung der Teilbilder (10, 10a bis 10t) korrigiert wird, indem radial oder axial entfernte Bildpunkte der Teilbilder (10, 10a bis 10t) ausgeblendet werden, wenn für die Lage dieser Bildpunkte relativ zur Strahlungsquelle ein vorbestimmbarer Grenzwert für einen zulässigen Verzerrungsgrad überschritten wird.

## Claims

1. Method for composing an overall image (12) from partial images (10, 10a to 10t) of the interior (6) of a body obtained using an imaging method, accordingly:
a) at least one location marker (8, 8a to 8f), which can be detected by means of an imaging method and which reproduces the position of the body in respect of the location marker (8, 8a to 8f) is inserted into the partial image (10, 10a to 10t) in order to obtain each partial image (10,10a to 10t);
b) the position and/or alignment of these partial images (10, 10a to 10t) is determined with regard to an absolute local grid on the basis of the location markers (8, 8a to 8f) inserted into the partial images (10, 10a to 10t);
c) the overall image (12) is merged on the basis of the specific position and/or alignment of the partial images (10, 10a to 10t),
**characterised in that**
with the use of an essentially punctiform radiation source by means of the location markers (8, 8a to 8f), a distortion of the partial images (10, 10a to 10t) occurring by virtue of the conical radiation path is corrected by fading out radially or axially distanced pixels of the partial images (10, 10a to 10t), if a predeterminable limit value for an acceptable degree of distortion is exceeded for the position of these pixels in respect of the radiation source.

2. Method according to claim 1,
**characterised in that**
the location markers (8, 8a to 8f), as a two-dimensional or three-dimensional structure (2), are integrated into a support arrangement for the body, which takes the form of a bearing surface or a surface mounting on an operating table.

3. Method according to claim 1 or 2,
**characterised in that**
the location markers (8, 8a to 8f) are realised in a reference panel (2) embodied as a calibration panel and a grid superimposed thereupon as x-ray impermeable markers.

4. Method according to one of the preceding claims,
**characterised in that**
an optical correction algorithm for eliminating an optical distortion and thus for changing the position of the pixels is determined by means of a reference image obtained using a body provided with reference location markers.

5. Method according to claim 4,
**characterised in that**
a correction is achieved by means of the optical correction algorithm, by applying the correction algorithm to the pixels of a partial image (10, 10a to 10t).

6. Method according to one of claims 1 to 5,
**characterised in that**
a correction is achieved with a radiation source aligned transversely to a projection surface, by carrying out an equalisation of the location markers (8, 8a to 8f) at their original distances and thus an equalization of the pixels in the partial image (10, 10a to 10t) on the basis of the location markers (8, 8a to 8f) detected in the partial image (10, 10a to 10t).

7. Method according to one of claims 1 to 6,
**characterised in that**
overlapping pixels of adjacent partial images (10, 10a to 10t) are added up and displayed as an average.

8. Method according to one of claims 1 to 7,
**characterised in that**
overlapping pixels are determined on two adjacent partial images (10, 10a to 10t) and also on one of the two partial images (10, 10a to 10t) the pixels of the overlapping region are rejected for the composition of the overall image (12) in support of the pixels of the overlapping area on the other of the two partial images (10, 10a to 10t) in each instance.

9. Method according to one of claims 1 to 8,
**characterised in that**
the position of the location markers (8, 8a to 8f) takes the form of a machine-readable encoding, preferably as a radiation opaque barcode.

10. Method according to one of claims 1 to 9,
**characterised in that**
a) at least one structure which is called up by means of the imaging method is identified in a data-specific manner in each partial image (10, 10a to 10t), preferably in its border areas;
b) the position and/or alignment of a partial image (10, 10a to 10t) is determined with regard to an adjacent partial image on the basis of the structures identified in the partial images (10, 10a to 10t).

11. System for composing an overall image (12) from partial images (10, 10a to 10t) of the interior (6) of a body obtained using an imaging apparatus, accordingly;
a) location markers (8, 8a to 8f) which can be detected by means of the imaging method are provided, which reproduce the position of the body in respect of the location markers (8, 8a to 8f) for a partial image (10, 10a to 10t).
b) an image memory for the partial image (10, 10a to 10t), which is supplemented with the detected location markers (8, 8a to 8f);
c) a computing unit, which calls the partial images (10, 10a to 10t) from the image memory and determines the position and/or alignment of this partial image (10, 10a to 10t) with regard to an absolute location grid on the basis of the location markers (8, 8a to 8f) inserted into the partial images (10, 10a to 10t) and merges the overall image (12) on the basis of the specific position and/or alignment of the partial images (10, 10a to 10t), and
d) a display unit for optically displaying the overall image (12),
**characterised in that**
with the use of an essentially punctiform radiation source by means of the location markers (8, 8a to 8f) a distortion of the partial images (10, 10a to 10t) occurring by virtue of the conical radiation path is corrected by fading out radially or axially distanced pixels of the partial images (10, 10a to 10t), if a predeterminable limit value for an acceptable level of distortion is exceeded for the position of these pixels in respect of the radiation source.

## Revendications

1. Procédé de composition d'une image (12) globale constitué de sous-images (10, 10a à 10t), obtenues par un procédé de formation d'images à partir de l'intérieur (6) d'un corps, dans lequel
a) pour obtenir chaque sous-image (10, 10a à 10t) on insère au moins un repère (8, 8a à 8f) spatial, pouvant être détecté au moyen du procédé de formation d'images et reproduisant la position du corps par rapport au repère (8, 8a à 8f) spatial, dans la sous-image (10, 10a à 10t),
b) au moyen des repères (8, 8a à 8f) spatiaux insérés dans les sous-images (10, 10a à 10t), on détermine la position et/ou la direction de ces sous-images (10, 10a à 10t) par rapport à une trame spatiale absolue,
c) au moyen de la position et/ou de la direction déterminée des sous-images (10, 10a à 10t), on assemble l'image (12) globale, **caractérisé en ce que**
en utilisant une source de rayonnement sensiblement ponctuelle, on corrige au moyen des repères (8, 8a à 8f) spatiaux une déformation des sous-images (10, 10a à 10t) se produisant en raison du trajet conique du rayonnement en supprimant des points images, éloignés radialement ou axialement, des sous-images (10, 10a à 10t) si, pour la position de ces points images par rapport à la source de rayonnement, une valeur limite pouvant être déterminée à l'avance est dépassée pour un degré de déformation admissible.

2. Procédé suivant la revendication 1,
**caractérisé en ce que**
les repères (8, 8a à 8f) spatiaux sont intégrés sous la forme d'une structure (2) plate ou à trois dimensions dans un dispositif de support du corps, qui a la forme d'une couchette ou d'un équipement sur une table d'opération.

3. Procédé suivant la revendication 1 ou 2,
**caractérisé en ce que**
on réalise les repères (8, 8a à 8f) spatiaux sous la forme de marqueurs imperméables aux rayons X dans un panneau (2) témoin conformé en panneau d'étalonnage et muni de réseaux qui y sont reproduits.

4. Procédé suivant l'une des revendications précédentes,
**caractérisé en ce que**
au moyen d'une image témoin qui est obtenue avec un corps équipé de repères spatiaux témoins, on détermine un algorithme de correction optique pour éliminer une déformation optique et ainsi pour modifier la position des points images.

5. Procédé suivant la revendication 4,
**caractérisé en ce que**
l'on obtient une correction au moyen de l'algorithme de correction optique, en utilisant l'algorithme de correction sur les points images d'une sous-image (10, 10a à 10t).

6. Procédé suivant l'une des revendications 1 à 5,
**caractérisé en ce que**
l'on obtient une correction pour une source de rayonnement inclinée sur une surface de projection en effectuant, au moyen de repères (8, 8a à 8f) spatiaux détectés dans la sous-image (10, 10a à 10t), un alignement des repères (8, 8a à 8f) spatiaux sur leur distance d'origine et ainsi un alignement des points images dans la sous-image (10, 10a à 10t)

7. Procédé suivant l'une des revendications 1 à 6,
**caractérisé en ce que**
l'on représente en en faisant la somme et la moyenne des points images se chevauchant de sous-images (10, 10a à 10t) voisines.

8. Procédé suivant l'une des revendications 1 à 7,
**caractérisé en ce que**
l'on détermine des points images se chevauchant sur deux sous-images (10, 10a à 10t) voisins et on rejette en outre sur l'une des deux sous-images (10, 10a à 10t) les points images de la partie de chevauchement pour la composition de l'image (12) globale au bénéfice des points images de la zone de chevauchement sur respectivement l'autre des deux sous-images (10, 10a à 10t).

9. Procédé suivant l'une des revendications 1 à 8,
**caractérisé en ce que**
l'on forme la position des repères (8, 8a à 8f) spatiaux sous la forme d'un codage pouvant être lu automatiquement, de préférence sous la forme d'un code à barres opaque au rayonnement.

10. Procédé suivant l'une des revendications 1 à 9,
**caractérisé en ce que**
a)on détecte par une technique de données dans chaque sous-image (10, 10a à 10t), de préférence dans ses parties de bord, au moins une structure appelée au moyen du procédé de formation d'images,
b) au moyen des structures détectées dans les sous-images (10, 10a à 10t), on détermine la position et/ou la direction d'une sous-image (10, 10a à 10t) par rapport à une sous-image voisine.

11. Système de composition d'une image (12) globale constituée de sous-images (10, 10a à 10t) obtenues par un dispositif de formation d'images à partir de l'intérieur (6) d'un corps, dans lequel
a) il est prévu des repères (8, 8a à 8f) spatiaux qui peuvent être détectés au moyen du procédé de formation d'images et qui reproduisent la position du corps par rapport au repère (8, 8a à 8f) spatial pour une sous-image (10, 10a à 10t),
b) une mémoire d'images pour la sous-image (10, 10a à 10t) qui est complétée par les repères (8, 8a à 8f) spatiaux détectés,
c) une unité de calcul, qui appelle les sous-images (10, 10a à 10t) de la mémoire d'images et au moyen des repères (8, 8a à 8f) spatiaux insérés dans les sous-images (10, 10a à 10t), détermine la position et/ou la direction de cette sous-image (10, 10a à 10t) par rapport à une trame spatiale absolue et assemble l'image (12) globale au moyen de la position et/ou de la direction déterminée des sous-images (10, 10a à 10t), et
d) une unité d'affichage pour la représentation optique de l'image (12) globale,
**caractérisé en ce que**
lors de l'utilisation d'une source de rayonnement sensiblement ponctuelle, une déformation des sous-images (10, 10a à 10t) se produisant en raison du trajet conique du rayonnement est corrigée au moyen des repères (8, 8a à 8f) spatiaux, en supprimant des points images, éloignés radialement ou axialement, des sous-images (10, 10a à 10t) si, pour la position de ces points images par rapport à la source de rayonnement, une valeur limite pouvant être déterminée à l'avance est dépassée pour un degré de déformation admissible.
